# EUROPÄISCHE PATENTSCHRIFT

(11) **EP 1 426 739 B1**
(45) Veröffentlichungstag und Bekanntmachung des Hinweises auf die Patenterteilung: **17.03.2010**
(21) Anmeldenummer: 03021285.6
(22) Anmeldetag: 19.09.2003
(51) Int. Cl.: G01F 1/66, G01P 5/00

(54) **Sende- und Empfangsschaltung für Ultraschall-Durchflussmesser**
Transmitting and receiving circuit for ultrasonic flowmeter
Circuit d'émission et de réception pour un débitmètre à ultrasons

(30) Priorität: 19.11.2002 DE 10253742
(43) Veröffentlichungstag der Anmeldung: 09.06.2004
(73) Patentinhaber: Hydrometer GmbH, 91522 Ansbach (DE)
(72) Erfinder: Gaugler, Ulrich, Dipl.Ing., 91746 Weidenbach (DE); Dietz, Gerhard, 91586 Lichtenau (DE)
(74) Vertreter: Blaumeier, Jörg

(56) Entgegenhaltungen:
- EP-A- 0 846 936
- DE-A- 10 048 959

## Beschreibung

Die Erfindung bezieht sich auf eine Sende- und Empfangsschaltung für Ultraschall-Durchflussmesser mit wenigstens zwei Ultraschall-Messwandlern, die zur Übertragung und zum Empfang von Ultraschallsignalen in entgegengesetzten Richtungen über eine Messstrecke angebracht sind, und die über mindestens zwei Schalter wahlweise auf einen gemeinsamen Ansteuerpunkt schaltbar sind, der mit einem Generator zum Ansteuern der Ultraschall-Messwandler und einem Komparator verbunden ist, dem die Empfangssignale der Ultraschall-Wandler zugeführt werden.

Bei einer aus der DE 100 48 959 A1 bekannt gewordenen Sende- und Empfangsschaltung der vorstehend beschriebenen Art ist zum Unterdrücken ungleicher Widerstände des Generators beim Senden und Empfangen ein Operationsverstärker vorgesehen, wodurch das Reziprozitätsprinzip erfüllt ist. Der Nachteil dieser bekannten Schaltung ist ihr komplexer Aufbau, sowie die Notwendigkeit teuerer Operationsverstärker mit hoher Frequenz, um sich ausregeln zu können.

Bei einer weiteren Sende- und Empfangsschaltung der eingangs genannten Art, wie sie in der EP 0 846 936 beschrieben ist, ergibt sich die Schwierigkeit, dass Wiederstandsänderungen des Generators zwischen Senden und Empfangen, die hier nicht unterdrückt werden, zu Fehlern führen.

Der Erfindung liegt daher die Aufgabe zugrunde, eine Sende- und Empfangsschaltung der eingangs genannten Art so auszugestalten, dass sie bei sehr einfachem und kostengünstigem Aufbau eine gleiche Beschaltung beim Senden und Empfangen gewährleistet, sodass das Reziprozitätsprinzip erfüllt ist.

Zur Lösung dieser Aufgabe ist erfindungsgemäß vorgesehen, dass der Generator, der Komparator und der gemeinsame Ansteuerpunkt der Schalter durch einen Transistor voneinander entkoppelt sind, wobei als Transistor sowohl bipolare Transistoren als auch beispielsweise Feldeffekt-Transistoren einsetzbar sind.

Bei der Verwendung eines bipolaren Transistors ist die Beschaltung vorteilhafter weise in der Weise getroffen, dass dessen Basis mit dem Generator und dessen Kollektor mit dem Komparator verbunden sind, während der Emitter an den gemeinsamen Ansteuerpunkt der Schalter für die Ultraschall-Messwandler angelegt ist.

Dabei versteht es sich von selbst, dass die Emitter-Basisstrecke an eine Stromversorgung angelegt ist und dass im Emitter und im Kollektorzweig gegebenenfalls entsprechende Ansteuerwiderstände angeordnet sind.

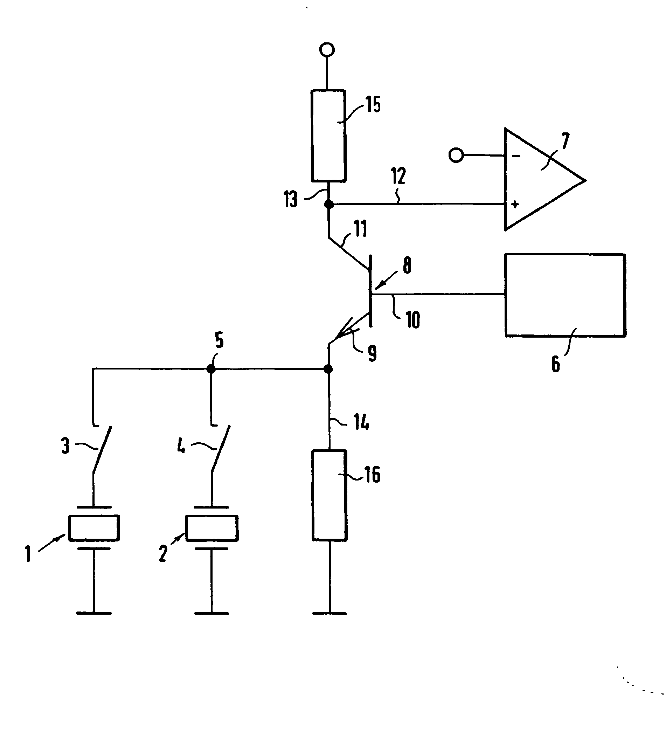

Weitere Vorteile, Merkmale und Einzelheiten der Erfindung ergeben sich aus der nachfolgenden Beschreibung eines Ausführungsbeispiels sowie anhand der Zeichnung.

Die sehr vereinfachte Sende- und Empfangsschaltung gemäß der Zeichnung umfasst zwei Ultraschall-Messwandler 1 und 2, die zur Übertragung und zum Empfang von Ultraschall-Signalen in entgegengesetzten Richtungen über eine nicht gezeigte Messstrecke angebracht sind, wobei diese Ultraschall-Wandler 1 und 2 wahlweise über Schalter 3 und 4 auf einen gemeinsamen Ansteuerpunkt 5 geschaltet werden können. Über diesen gemeinsamen Ansteuerpunkt 5 können Steuersignale eines Generators 6 einem der Ultraschall-Wandler 2 zugeführt werden, der dann als Sender fungiert, während die Empfangssignale des jeweils anderen Ultraschall-Wandlers über den gemeinsamen Ansteuerpunkt 5 einem Komparator 7 zugeführt werden können, der in an sich bekannter Weise und deshalb in den Zeichnungen nicht dargestellt und hier auch nicht näher beschrieben, aus den gemessenen Laufzeitdifferenzen der Empfangssignale die Durchflussgeschwindigkeit und daraus resultierend die Durchflussmenge über die Messstrecke bestimmt. Die hierzu erforderlichen zusätzlichen allgemein bekannten Messglieder sind nicht mit dargestellt.

Zur Entkopplung von Detektor, Komparator und den Ultraschall-Messwandlern und zur Unterdrückung ungleicher Widerstände des Generators beim Senden und Empfangen und der daraus resultierenden Messfehler ist ein Transistor 8 vorgesehen, dessen Emitter 9 mit dem gemeinsamen Ansteuerpunkt 5 verbunden ist, dessen Basis 10 mit dem Generator 6 verbunden ist und von dessen Kollektor 11 die Verbindungsleitung 12 zum Komparator 7 abzweigt. Im Kollektorzweig 13 und im Emitterzweig 14 sind in an sich bekannter Weise Ansteuerwiderstände 15 und 16 angeordnet.

Die erfindungsgemäße Ansteuerschaltung arbeitet wie folgt:

Beim Senden in Richtung 1, also vom Ultraschall-Wandler 2 als Sender zum Ultraschall-Wandler 1 als Empfänger, ist zunächst der Schalter 3 geöffnet und der Schalter 4 geschlossen. Bei diesem Senden in Richtung 1 wird das Signal vom Generator 6 über die Basis 10 des Transistors 8 und den Schalter 4 auf den Wandler 2 geführt. Der Transistor wird in Kollektorschaltung betrieben.

Nach dem vorstehend beschriebenen Senden in Richtung 1 wird auf Empfang in Richtung 1 geschaltet, das heißt, der Schalter 4 wird geöffnet und der Schalter 3 geschlossen. Das Empfangssignal des Wandlers 1 wird über den Schalter 3 auf den gemeinsamen Ansteuerpunkt 5 und von dort an den Emitter 9 des Transistors 8 gegeben. Da die Basis konstant bleibt (der Generator ist abgeschaltet, bzw. hat konstanten Pegel), ändert sich die Basis-Emitter-Spannung. Das Empfangssignal erscheint verstärkt am Kollektor 11 des Transistors 8, von wo es auf den Komparator 7 gegeben wird, der es digitalisiert.

In umgekehrter Richtung, also beim Senden und Empfangen in Richtung 2 vom Ultraschall-Wandler 1 als Sender zum Ultraschall-Wandler 2 als Empfänger, ist im Sendefall der Schalter 4 offen und der Schalter 3 geschlossen, ansonsten ist der Signalfluss analog wie oben beschrieben. Im Empfangsfall in Richtung 2 ist der Schalter 3 offen und der Schalter 4 geschlossen.

Die Erfindung ist nicht auf das dargestellte Ausführungsbeispiel beschränkt. Insbesondere wäre es auch möglich, anstelle eines bipolaren Transistors 8 einen Feldeffekt-Transistor oder gegebenenfalls auch eine Transistorschaltung aus mehreren Transistoren einzusetzen.

## Patentansprüche

1. Sende- und Empfangsschaltung für Ultraschall-Durchflussmesser mit wenigstens zwei Ultraschall-Messwandlern (1,2), die zur Übertragung und zum Empfang von Ultraschallsignalen in entgegengesetzten Richtungen über eine Messstrecke angebracht sind, und die über mindestens zwei Schalter (3,4) wahlweise auf einen gemeinsamen Ansteuerpunkt (5) schaltbar sind, der mit einem Generator (6) zum Ansteuern der Ultraschall-Messwandler (1,2) und einem Komparator (7) verbunden ist, dem die Empfangssignale der UltraschallWandler zugeführt werden, **dadurch gekennzeichnet, dass** der Generator (6), der Komparator (7) und der gemeinsame Ansteuerpunkt (5) der Schalter (3, 4) mit den Anschlüssen eines bipolaren Transistors (8) oder eines Feldeffekttransistors, über diesen voneinander entkoppelt, verbunden sind.

## Claims

1. A transmitting and receiving circuit for ultrasound through-flow meters with at least two ultrasound test converters (1, 2), which are attached for the transmission and reception of ultrasound signals in opposite directions via test pathway, and which can be connected selectively via at least two switches (3, 4) to a common control point (5), which is connected to a generator (6) for the control of the ultrasound test converter (1, 2) and to a comparator (7), to which the reception signals of the ultrasound converters are supplied,
**characterised in that**
the generator (6), the comparator (7) and the common control point (5) of the switches (3, 4) are connected to the connections of a bipolar transistor (8) or field-effect transistor, decoupled from one another by the latter.

## Revendications

1. Circuit émetteur récepteur pour débitmètre à ultrasons, comprenant au moins deux transducteurs à ultrasons (1, 2) qui sont montés sur une distance mesurée dans des directions opposées en vue de transmettre et de recevoir des signaux ultrasonores, et qui peuvent être commutés par l'intermédiaire d'au moins deux commutateurs (3, 4) sélectivement sur un point d'excitation commun (5) qui est relié à un générateur (6) d'excitation des transducteurs à ultrasons (1, 2) et à un comparateur (7) auquel sont amenés les signaux de réception des transducteurs à ultrasons, **caractérisé en ce que** le générateur (6), le comparateur (7) et le point d'excitation commun (5) des commutateurs (3, 4) sont reliés aux bornes d'un transistor bipolaire (8) ou d'un transistor à effet de champ, en étant découplés les uns des autres par l'intermédiaire de celui-ci.
